# EUROPEAN PATENT SPECIFICATION

(11) **EP 1 111 353 B1**
(45) Date of publication and mention of the grant of the patent: **20.09.2006**
(21) Application number: 00204621.7
(22) Date of filing: 19.12.2000
(51) Int. Cl.: G01G 19/08, G01G 21/23

(54) **Weighing device**
Wiegeeinrichtung
Dispositif de pesage

(30) Priority: 21.12.1999 BE 9900821
(43) Date of publication of application: 27.06.2001
(73) Proprietor: Van de Vliet, Ronny, 2300 Turnhout (BE)
(72) Inventor: Van de Vliet, Ronny, 2300 Turnhout (BE)
(74) Representative: Donné, Eddy

(56) References cited:
- EP-A- 0 290 880
- EP-A- 0 744 598
- EP-A- 0 952 436
- US-A- 4 396 079
- US-A- 4 597 460
- US-A- 4 666 006
- US-A- 5 894 112

## Description

This invention relates to a weighing device for weighing loads, said device comprising at least one pressure force indicator, also called load cell, mounted between two mounting parts.

Such weighing devices are used particularly in mobile weighing systems, such as mobile weighing bridges or in vehicles wherein a weighing system is incorporated, such as lorries, agricultural machines, forklifts etc.

In such weighing system, several weighing devices are mounted between a main chassis and an auxiliary chassis carrying the load to be weighed, for instance in a container or a tank.

A load cell, which is known per se, is usually provided with strain gauges, which are deformed when a load is applied to the load cell and give thereby an electrical signal depending on this load, which signal permits to show a value of the load for instance on a display.

Most load cells are single ended beam load cells. They are longitudinal and fixed with one end, while the force of the load is exerted on the opposite and free end which can somewhat deform under the load. This deformation is detected by the strain gauges.

Other load cells are double ended beam load cells and have two opposite free ends, the load being distributed to both ends. US-A-5.894.112 discloses a weighing apparatus comprising six of such double ended shear beam load cells mounted between a base and a platform.

Single ended beam load cells can hold large forces in the horizontal directions and are greatly independent from these forces when considering the vertical force which has to be measured.

Moreover, these load cells are largely available on the market and easy to acquire.

A drawback of these single ended beam load cells is that the introduction of the force to be measured is not so efficient as in known double ended beam load cells built out of one piece. The impact of the load on the load cell needs to be relatively precise in order to obtain an accurate measurement.

Such double ended beam load cells are expensive and difficult to find and lack flexibility in dimensions.

It is therefore known to incorporate several single ended beam load cells in a weighing device. US-A-4.666.006 discloses such weighing device comprising two pairs of single ended beam load cells. The two cells of each pair are variable moment cells and are adjustably mounted in a supported structure.

The free ends of the four cells support a weighing platform through vertical supporting members, which are of a relative complex structure in order to permit the adjustment of the load cells in said supported structure.

Also document 4 597 460 discloses a weighing device with multiple single ended beam load cells. However, the device is not applicable at all in mobile systems, since the weighing platform is suspended by means of cables form the load cells,

The aim of the invention is to offer a weighing device behaving like a double ended beam load cell without its limitations, but of a relatively simple construction and permitting an accurate measurement.

In accordance with the invention, this object is accomplished in a weighing device which comprises two single ended beam load cells mounted between two mounting parts, which load cells are fixed to a first of said mounting parts, and are connected to each other on the side of the second of said mounting parts, by means of at least one connection piece, while this second mounting part is co-operating with each of both load cells by means of two force-transmitting structures each comprising a projection on the load cell or the second mounting part and slidably fitted in a hole in the second mounting part or the load cell, respectively.

The projections are fitted in the holes with just enough play to permit the slight deformation of the free ends of the load cells under the effect of a load, required to obtain an accurate measurement by the load cell.

Due to the projections, large horizontal forces can be transferred from the first to the second mounting part, so that only a small flexibility of one part with respect to the other is required.

Preferably, the projections are present on the second mounting part, while the holes are in the load cells.

Most of the single beam load cells are provided with a force-introduction hole and the holes in the load cells may be these force-introduction holes.

Preferably, the second mounting part is resiliently fixed to each load cell by means of a resilient connection.

The resilient connection between the second mounting part and each load cell comprises a bolt screwed in the second mounting part and traversing freely the load cell and a spring element, for example a spring washer around the bolt, between the head of the bolt and the load cell.

The first mounting part can be a mounting base to be fixed to a chassis, while the second mounting part is a support for the load or for an intermediate frame carrying the load.

The invention will now be described by way of example and with reference to-the accompanying drawings, wherein:
Figure 1 is a lateral view of a weighing device according to the invention mounted in a vehicle;
Figure 2 shows a longitudinal section of a weighing device of figure 1;
Figure 3 shows a section according to line III-III in figure 2.

The weighing device shown in the figures comprises mainly a first mounting part formed by a solid mounting base 1, a second mounting part formed by a solid support 2 situated above the base 1 and between these mounting parts, two single ended beam load cells 3 directed with their rear sides to each other.

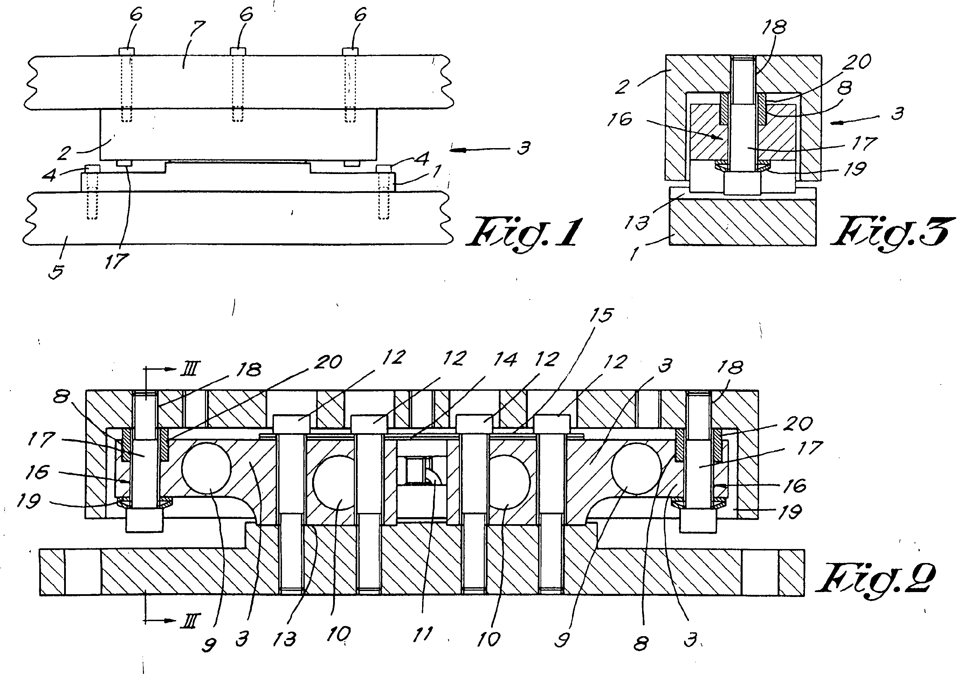

As shown in figure 1, the mounting base 1 is fixed by means of bolts 4 upon a frame 5 of a vehicle while the support 2 is fixed by means of bolts 6 to an auxiliary frame 7 carrying the load to be weighed.

It is obvious that the base 1 may be fixed otherwise to the frame 5. The base 1 may for example be welded to the frame 5, possibly to a lateral side of a beam of the frame or on a console or supports welded to this beam. Also the support 2 may be fixed otherwise to the frame 7, for instance by welding, possibly to a lateral side of a beam of the frame 7 or to supports on this lateral side.

As the load cells 3 are single ended load cells, they have one free end for receiving the load to be measured, said end being provided on its top side with a round force-receiving hole 8.

Each load cell 3 is further provided at its free end with a transverse hole 9 for receiving strain gauges and at its fixed end for example with a transverse hole 10 for an electronic device. The signal of this electronic device is sent via a cable 11 to a display, computer or other signal-transforming device (not shown).

Both load cells 3 are positioned back to back, this is with their free ends directed in opposite directions.

The fixed ends of both load cells 3 are fixed to the base 1 by means of bolts 12. To position the load cells 3, and to assist the bolts 12 in catching horizontal forces, the base 1 is provided with recesses 13 wherein the bottom of the load cells 3 fit.

On the top side, the fixed rear ends of both load cells 3 are connected to each other by means of connection pieces consisting of two superposed steel strips 14 and 15, which are fixed to the load cells 3 by means of the above mentioned bolts 12.

The support 2 is resiliently connected to the free end of each of the load cells 3 by means of a resilient connection 16 comprising a bolt 17 introduced from beneath through the free end and screwed in a threaded hole 18 in the support 2, one or more spring washers 19 being inserted between the head of the bolt 17 and the free end of the load cell 3.

The mounting part formed by the support 2 is provided with two round projections 20 slidably fitted in the force-receiving holes 8 in the free ends of the load cells 3. These projections 20 are for example welded to the remainder of the support 2.

As an alternative a projection 20 can be provided on the free end of each load cell 3, which slidably fit in holes 8 provided in the support 2.

The bolts 17 traverse freely the round projections 20 so that these projections 20 can slightly move the free ends of the load cells 3 under the influence of a load. The bolts 17 with the spring washer 19 prevent the support 2 to be lifted up from the load cells 3.

Each of these projections 20 transmit the force due to the weight of the load from the support 2 to a load cell 3.

The projections 20 are inserted in the holes 8 with some play, more particularly just enough play to permit the movement of the free end of the load cells 3 as a result of the pressure exerted by the support 2 or in other words as a result of the load.

These projections 20 catch also horizontal forces and transmit any movement of the second support 2 in a direction perpendicular to the force to be measured, to the load cells 3, without interfering with the movement in the direction of the force, required for the measurement.

Consequently an accurate measurement is possible and a good force transmission is obtained.

Different sizes and thus weight capacities are easily possible as it is made from easily available single beam ended load cells.

The weighing device as described may be mounted upside down between the frame 5 and the auxiliary frame 7, whereby the mounting part 2 forms the base and the mounting part 1 forms the support

Several weighing devices as described may be mounted between the frame 5 and the auxiliary frame 7. As the devices are independent and should be somewhat flexible with respect to each other, an elastic bearing, for example from rubber or synthetic elastomer, may be interposed between the base 1 and/or the support 2 and the corresponding frame 5 or 7 to which it is fixed.

## Claims

1. Weighing device for weighing loads, which comprises two single ended beam load cells (3) mounted between two mounting parts (1,2) whereby both load cells are mounted back to back, this is with their free ends directed in opposite directions and with their mean sides or fixed ends towards each other **characterised in that** the load cells (3) are at their rear sides, on the one hand, with their base, fixed to a first of said mounting parts (1), and, on the other hand, with their top connected to each other, by means of at least one connection piece (14,15), while the second mounting part (2) is co-operating with the free ends of each of both load cells (3) by means of two force-transmitting structures each comprising a projection (20) on the free end of the load cell (3) or the second mounting part (2) and slidably fitted in a hole (8) in the second mounting part (2) or in the free end of the load cell (3), respectively, whereby
the projections (20) are fitted in the holes (8) with just enough play to permit the slight deformation of the free ends of the load cells (3) under the effect of a load, required to obtain an accurate measurement by the load cell.

2. Weighing device according to claim 1, **characterised in that** the second mounting part (2) is provided with projections (20) which slidably fit in holes (8) in the free end of the load cells (3).

3. Weighing device according to claim 2, **characterised in that** the holes (8) in the load cells (3) are the force-introduction holes with which the load cells (3) are provided.

4. Weighing device according to any one of the preceding claims, **characterised in that** the second mounting part (2) is resiliently fixed to each load cell (3) by means of a resilient connection (16).

5. Weighing device according to claim 4, **characterised in that** the resilient connection (16) between the second mounting part (2) and each load cell (3) comprises a bolt (17) screwed in the second mounting part (2) and traversing freely the load cell (3) and a spring element around the bolt (17) between the head of the bolt (17) and the load cell (3).

6. Weighing device according to claim 5, **characterised in that** the spring element is a spring washer (16).

7. Weighing device according to claim 5 or 6, **characterised in that** the bolt (17) traverses the projection (20).

8. Weighing device according to any one of the preceding claims, **characterised in that** the first mounting part is a mounting base (1) to be fixed to a frame (5) and the second mounting part is a support (2) for the load or an intermediate frame (7) carrying the load.

9. Weighing device according to any one of the preceding claims, **characterised in that** the first mounting part (1) is provided with at least one recess (13) receiving a fixed portion of the load cells (3), for positioning these load cells (3).

## Patentansprüche

1. Wiegevorrichtung zum Wiegen von Lasten, welche zwei einseitige Biegestab-Wägezellen (3) umfasst, die zwischen zwei Montageteilen (1,2) montiert sind, wobei beide Wägezellen Rücken an Rücken montiert sind, das heißt, mit ihren freien Enden in entgegengesetzte Richtungen gerichtet und mit ihren Rückseiten oder feststehenden Enden zueinander, **dadurch gekennzeichnet, dass** die Wägezellen (3) an ihren Rückseiten einerseits mit ihrer Basis (1) an einem ersten der besagten Montageteile (1) befestigt sind und andererseits mit ihrer Oberseite, mittels wenigstens eines Verbindungsstücks (14,15), miteinander verbunden sind, während das zweite Montageteil (2) mit den freien Enden jeder der beiden Wägezellen (3) mittels zweier Kraftübertragungsstrukturen zusammenwirkt, die jede einen Vorsprung (20) am freien Ende der Wägezelle (3) oder des zweiten Montageteils (2) umfassen und verschieblich in eine Öffnung (8) in dem zweiten Montageteil (2) beziehungsweise in das freie Ende der Wägezelle (3) eingepasst sind, wobei die Vorsprünge (20) mit gerade genug Spiel in die Öffnungen (8) eingepasst sind, um die geringe Verformung der Wägezellen (3) unter der Einwirkung einer Last zu gestatten, die erforderlich ist, um eine genaue Messung durch die Wägezelle zu erhalten.

2. Wiegevorrichtung gemäß Anspruch 1, **dadurch gekennzeichnet, dass** das zweite Montageteil (2) mit Vorsprüngen (20) versehen ist, die verschieblich in Öffnungen (8) im freien Ende der Wägezellen (3) passen.

3. Wiegevorrichtung gemäß Anspruch 2, **dadurch gekennzeichnet, dass** die Öffnungen (8) in den Wägezellen (3) die Krafteinbringöffnungen sind, womit die Wägezellen (3) versehen sind.

4. Wiegevorrichtung gemäß einem der vorhergehenden Ansprüche, **dadurch gekennzeichnet, dass** das zweite Montageteil (2) mittels einer elastischen Verbindung (16) elastisch an jeder Wägezelle (3) befestigt ist.

5. Wiegevorrichtung gemäß Anspruch 4, **dadurch gekennzeichnet, dass** die elastische Verbindung (16) zwischen dem zweiten Montageteil (2) und jeder Wägezelle (3) einen Bolzen (17), der in das zweite Montageteil (2) geschraubt ist und die Wägezelle (3) frei durchquert, und ein Federelement um den Bolzen (17) zwischen dem Kopf des Bolzens (17) und der Wägezelle (3) umfasst.

6. Wiegevorrichtung gemäß Anspruch 5, **dadurch gekennzeichnet, dass** das Federelement eine federnde Unterlegscheibe (16) ist.

7. Wiegevorrichtung gemäß Anspruch 5 oder 6, **dadurch gekennzeichnet, dass** der Bolzen (17) den Vorsprung (20) durchquert.

8. Wiegevorrichtung gemäß einem der vorhergehenden Ansprüche, **dadurch gekennzeichnet, dass** das erste Montageteil eine Montagebasis (1) zur Befestigung an einem Gestell (5) ist und das zweite Montageteil ein Träger (2) für die Last oder ein die Last tragendes Zwischengestell (7) ist.

9. Wiegevorrichtung gemäß einem der vorhergehenden Ansprüche, **dadurch gekennzeichnet, dass** das erste Montageteil (1) mit wenigstens einer Aussparung (13) versehen ist, die einen feststehenden Teil der Wägezellen (3) zur Positionierung dieser Wägezellen (3) aufnimmt.

## Revendications

1. Dispositif de pesée pour peser des charges, qui comprend deux capteurs dynamométriques en flexion (3) à une seule extrémité montés entre deux éléments de montage (1, 2), les deux capteurs dynamométriques en flexion étant montés dos à dos, c'est-à-dire avec leurs extrémités libres orientées dans des directions opposées et avec leurs côtés arrière ou leurs extrémités fixes tournés l'un vers l'autre, **caractérisé en ce que** les capteurs dynamométriques en flexion, à leurs côtés arrière, d'une part, sont fixés avec leurs bases à un premier desdits éléments de montage (1) et, d'autre part, avec leurs sommets, sont reliés l'un à l'autre au moyen d'au moins une pièce de raccord (14, 15), tandis que le deuxième élément de montage (2) coopère avec les extrémités libres de chacun des deux capteurs dynamométriques en flexion (3) au moyen de deux structures de transmission de force comprenant chacune une saillie (20) sur l'extrémité libre du capteur dynamométrique en flexion (3) ou du deuxième élément de montage (2), qui vient s'insérer par glissement dans un trou (8) pratiqué dans le deuxième élément de montage (2) ou dans l'extrémité libre du capteur dynamométrique en flexion (3), respectivement, les saillies (20) venant s'insérer dans les trous (8) avec un jeu juste suffisant pour permettre la légère déformation des extrémités libres des capteurs dynamométriques en flexion (3) sous l'effet d'une charge, requis pour obtenir une mesure précise via le capteur dynamométrique en flexion.

2. Dispositif de pesée selon la revendication 1,
**caractérisé en ce que** le deuxième élément de montage (2) est muni de saillies (20) qui viennent s'insérer dans l'extrémité libre des capteurs dynamométriques en flexion (3).

3. Dispositif de pesée selon la revendication 2,
**caractérisé en ce que** les trous (8) dans les capteurs dynamométriques en flexion (3) représentent les trous d'introduction de force dont sont munis les capteurs dynamométriques en flexion (3).

4. Dispositif de pesée selon l'une quelconque des revendications précédentes, **caractérisé en ce que** le deuxième élément de montage (2) est fixé en résilience à chaque capteur dynamométrique en flexion (3) au moyen d'un raccord résilient (16).

5. Dispositif de pesée selon la revendication 4,
**caractérisé en ce que** le raccord résilient (16) entre le deuxième élément de montage (2) et chaque capteur dynamométrique en flexion (3) comprend un boulon (17) vissé dans le deuxième élément de montage (2) et traversant librement le capteur dynamométrique en flexion (3), et un élément de ressort autour du boulon (17) entre la tête du boulon (17) et le capteur dynamométrique en flexion (3).

6. Dispositif de pesée selon la revendication 5,
**caractérisé en ce que** l'élément de ressort est une rondelle de ressort (16).

7. Dispositif de pesée selon la revendication 5 ou 6, **caractérisé en ce que** le boulon (17) traverse la saillie (20).

8. Dispositif de pesée selon l'une quelconque des revendications précédentes, **caractérisé en ce que** le premier élément de montage est une base de montage (1) qui doit être fixée à un bâti (5) et le deuxième élément de montage est un support (2) pour la charge ou pour un cadre intermédiaire (7) supportant la charge.

9. Dispositif de pesée selon l'une quelconque des revendications précédentes, **caractérisé en ce que** le premier élément de montage (1) est muni d'au moins un évidement (13) dans lequel vient se loger une portion fixe des capteurs dynamométriques en flexion (3) pour le positionnement de ces capteurs dynamométriques en flexion (3).
